# EUROPÄISCHE PATENTANMELDUNG

(11) **EP 1 147 945 A2**
(43) Veröffentlichungstag der Anmeldung: **24.10.2001**
(21) Anmeldenummer: 01105748.6
(22) Anmeldetag: 08.03.2001
(51) Int. Cl.: B60R 21/01

(54) **Steuereinrichtung und Verfahren für eine Airbagauslösung**

(30) Priorität: 20.04.2000 DE 10019590
(71) Anmelder: Bayerische Motoren Werke Aktiengesellschaft, 80809 München (DE)
(72) Erfinder: Seidl, Josef, 84130 Dingolfing (DE)

(57) **Zusammenfassung**

Die Erfindung betrifft Steuereinrichtung und ein Verfahren für eine Airbagauslösung, insbesondere bei Einspurfahrzeugen, mit einem Steuergerät, welches Eingangssignale empfängt und auswertet und derart ausgebildet ist, um bei Vorliegen definierter Bedingungen ein Signal zu erzeugen, welches zu einer Airbagauslösung führt.

Zur Vermeidung einer Airbag-Fehlauslösung wird vorgeschlagen, dass ein Sensor zur Detektion der Drehung oder einer Verzögerung des Vorderrades vorgesehen ist und ein entsprechendes Signal erzeugt, dass - falls ein Antiblockiersystem vorhanden ist - ein Aktivierungssignal erzeugt wird, dass eine Vorrichtung zur Detektion einer Vorderradbremsbetätigung vorgesehen ist und ein entsprechendes Signal erzeugt, dass die Signale dem Steuergerät zugeführt sind und dass das Steuergerät derart ausgebildet ist, um eine Airbagauslösung neben zumindest einer anderen Bedingung dann zuzulassen, wenn bei unbetätigter Bremse oder bei betätigter Bremse jedoch aktiviertem Antiblockiersystem das Vorderrad auf Null verzögert ist.

## Beschreibung

Die Erfindung betrifft eine Steuereinrichtung und ein Verfahren für eine Airbagauslösung, insbesondere in Einspurfahrzeugen, gemäß den Oberbegriffen der Ansprüche 1 bzw. 5.

Airbagauslösungen in Zweispurfahrzeugen sind allgemein bekannt und stützen sich oftmals auf Signale von Beschleunigungssensoren. Zudem werden manchmal auch andere Fahrzeugbetriebsbedingungen, wie beispielsweise ein Schleudervorgang etc., berücksichtigt.

Bei Einspurfahrzeugen kann die "Zweispur-Technik" nicht ohne weiteres übernommen werden. Würde man sich hinsichtlich der Airbagauslösung nur auf die Längsbeschleunigungsinformation verlassen, müßte eine entsprechende Schwelle hoch angesetzt werden, um Fehlauslösungen zu vermeiden. Fehlauslösungen bei Einspurfahrzeugen beeinträchtigen die Fahrsicherheit nämlich in ganz erheblichem Ausmaß. Eine zu hoch angesetzte Auslösungsschwelle führt jedoch zu einem zu späten Auslösen, so dass die Schutzwirkung des Airbags nicht mehr vollständig ausgenutzt werden kann.

Aufgabe der vorliegenden Erfindung ist es daher, eine Steuereinrichtung und ein Verfahren für eine Airbagauslösung, insbesondere bei Einspurfahrzeugen, anzugeben, mit der die obigen Nachteile vermieden werden können.

Diese Aufgabe wird durch die im Anspruch 1 bzw. im Anspruch 5 genannten Merkmale gelöst.

Ein erfindungswesentliches Merkmal ist dabei die Berücksichtigung von einspurspezifischen Verhalten, die bei einer Kollision auftreten. Insbesondere wird geprüft, ob die Raddrehzahl des Vorderrades bei unbetätigter Vorderradbremse oder betätigter Vorderradbremse jedoch aktiviertem Antiblockiersystem (soweit ein solches vorhanden ist) auf Null verzögert wird. Ist dies bei einer Fahrzeuggeschwindigkeit über einer bestimmten Geschwindigkeitsschwelle oder bei anderen Bedingungen, z.B. dem Überschreiten einer definierten Verzögerungsschwelle, der Fall, so kann man aus dieser Bedingung auf eine Kollision schließen.

Ist in einem Einspurfahrzeug ein Antiblockiersystem vorgesehen, so kann der Airbag auch dann ausgelöst werden, wenn die Vorderradbremse betätigt ist. Zur Vermeidung einer Radblockade müsste das Antiblockiersystem nämlich den Bremsdruck verringern. Verzögert das Vorrderrad trotz einer solchen Reduktion des Bremsdruckes im wesentlichen auf Null, so kann wiederum auf eine Kollision geschlossen werden.

Die Verzögerung des Vorderrades auf Null wird im wesentlichen durch das einspurtypische Kollidieren des Vorderrades mit dem Hindernis verursacht. Beim Abheben des Hinterrades kommt es zudem zu einer Rückdrehung des Vorderrades, so dass auch bei einer gemeinsamen Bewegung der kollidierten Fahrzeuge die Wahrscheinlichkeit für einen Nulldurchgang der Raddrehzahl am Vorderrad hoch ist. Durch die Kombination mit zumindest einer zusätzlichen Bedingung, wie dem Überschreiten einer bestimmten Fahrgeschwindigkeitsschwelle oder dem Überschreiten einer bestimmten Fahrzeugverzögerungsschwelle, kann mit der Erfassung einer Drehzahl von Null für das Vorderrad oder einer entsprechenden Verzögerung ein sicheres Auslösen einer Airbageinrichtung, insbesondere bei einem Einspurfahrzeug, erreicht werden. Insbesondere kann die Auslöseschwelle für einen Beschleunigungssensor tief angesetzt werden, ohne dass die Gefahr einer Fehlauslösung in Kauf genommen werden muß. Zudem ergibt sich eine bessere Nutzung der verfügbaren Zeit und eine bessere Schutzwirkung.

Die vorliegende Erfindung wird nachfolgend anhand eines Ausführungsbeispiels und mit Bezug auf die beiliegenden Zeichnungen näher erläutert. Die Zeichnungen zeigen in
- Fig. 1: ein vereinfachtes Blockdiagramm einer Ausführungsform der vorliegen- den Erfindung und
- Fig. 2: ein Flußdiagramm, welches einen Algorithmus darstellt, der zum Betrieb einer Vorrichtung gemäß Fig. 1 gewählt werden kann.

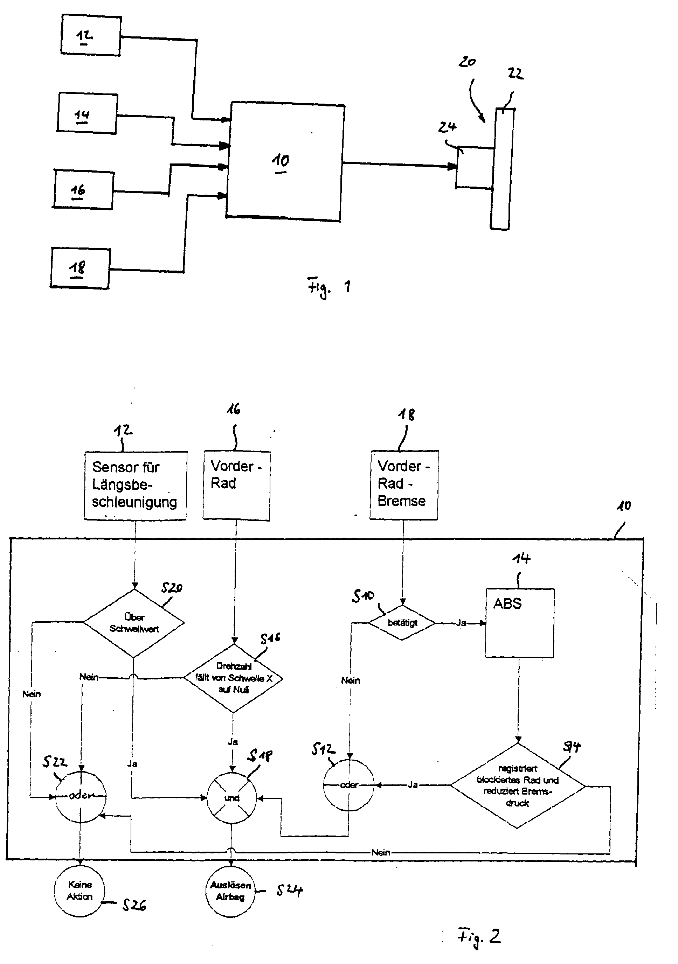

In Fig. 1 ist in einer sehr einfachen Blockdarstellung ein Steuergerät 10 dargestellt, welches von vier Sensoren bzw. Vorrichtungen Eingangssignale zur Verfügung gestellt bekommt.

Bei den vier Sensoren oder Vorrichtungen handelt es sich um einen Sensor zur Ermittlung der Längsbeschleunigung 12, um ein Antiblockiersystem 14, welches ein Signal, das den Betrieb des Antiblockiersystems 14 anzeigt, an das Steuergerät übermittelt, einen Sensor 16 zur Ermittlung der Raddrehzahl des Vorderrades eines nicht dargestellten Motorrades sowie einen Sensor 18 zur Ermittlung einer Bremsbetätigung. Als Sensor 18 kann beispielsweise ein üblicher Bremslichtschalter verwendet werden.

Alle Sensoren oder Einrichtungen 12 bis 18 geben ein entsprechendes Signal an das Steuergerät 10 ab. Das Steuergerät 10 ist nun so ausgebildet, dass es einen Ablauf wie nachfolgend in Fig. 2 dargestellt durchführen kann. Bei Vorliegen von bestimmten Bedingungen wird ein Airbagauslösesignal an eine Airbageinheit 20 abgegeben. Die Airbageinheit 20 umfaßt eine Zündpille 24, welche bei Aktivierung einen Gasgenerator betreibt, der einen Airbag 22 aufbläst.

Die Funktionsweise des Steuergerätes 10 wird anhand der Fig. 2 näher erläutert. Demgemäß gibt der Sensor 18 ein Signal an das Steuergerät 10 ab, welches feststellt, ob die Vorderradbremse betätigt ist (Schritt S10). Ist dies der Fall, so wird geprüft, ob das Antiblockiersystem 14 einen Betrieb meldet. Demgemäß wird in S14 geprüft, ob das Rad blockiert ist und der Bremsdruck zur Vermeidung der Blockade des Vorderrades reduziert wird. Wird trotz der Reduzierung des Bremsdruckes weiterhin ein blockiertes Rad registriert, so wird ein entsprechendes Signal an ein logisches ODER-Element (S12) abgegeben. Ferner wird ein Signal an das ODER-Element (S12) dann abgegeben, wenn die Vorderradbremse nicht betätigt ist. Aus der ODER-Verknüpfung wird ein Signal an ein UND-Element (S18) abgegeben.

Wird bei S14 jedoch festgestellt, dass das Vorderrad bei einer Reduzierung des Bremsdruckes nicht mehr blockiert, so wird ein entsprechendes Signal an ein ODER-Element (S22) abgegeben.

Parallel wird geprüft, ob der vom Vorderradsensor 16 ermittelte Wert anzeigt, dass die Drehzahl des Vorderrades auf Null gefallen ist (S16). Ist dies der Fall, so wird ein Signal an das UND-Element S 18 abgegeben. Ist dies nicht der Fall, so wird ein Signal an das ODER-Element (S22) abgegeben.

In einem dritten Parallelschritt wird geprüft, ob das von dem Längsbeschleunigungssensor 12 stammende Signal über einem Schwellwert liegt (S20). Ist dies der Fall, so wird ein Signal an das UND-Element (S18) abgegeben. Ist dies nicht der Fall, so wird ein Signal an das ODER-Element (S22) abgegeben.

Wird nun insgesamt festgestellt, dass die Raddrehzahl des Vorderrades auf Null abfällt, obwohl die Vorderradbremse nicht betätigt ist oder bei betätigter Vorderradbremse das Antiblockiersystem aktiviert ist, so wird von dem UND-Element (S18) ein Signal erzeugt, welches den Airbag auslöst (S24).

Wird hingegen festgestellt, dass sich das blockierte Rad nach einer Reduzierung des Bremsdruckes bei betätigter Bremse wieder löst oder dass die Längsbeschleunigung unter einem bestimmten Schwellwert liegt oder dass die Raddrehzahl nicht auf Null gefallen ist, so wird keine Aktion in Bezug auf die Auslösung eines Airbags ergriffen (S26).

Insgesamt kann damit eine Airbagfehlauslösung möglichst vermieden werden.

Natürlich sind auch andere Ausführungsformen der vorliegenden Erfindung möglich. Wesentlich ist die Berücksichtigung eines Abfalls der Raddrehzahl auf Null bei nichtbetätigter Bremse oder bei betätigter Bremse, wenn das Antiblockiersystem zwar eingeschaltet ist, jedoch keine Freigabe eines blockierten Rades trotz Reduzierung des Bremsdruckes erfolgt.

## Patentansprüche

1. Steuereinrichtung für eine Airbagauslösung, insbesondere bei Einspurfahrzeugen, mit einem Steuergerät, welches Eingangssignale empfängt und auswertet und derart ausgebildet ist, um bei Vorliegen definierter Bedingungen ein Signal zu erzeugen, welches zu einer Airbagauslösung führt,
**dadurch gekennzeichnet**
**dass** ein Sensor zur Detektion der Drehung eines Vorderrades oder einer Verzögerung des Vorderrades vorgesehen ist und ein entsprechendes Signal erzeugt,
**dass** - falls ein Antiblockiersystem vorhanden ist - dieses ein Aktivierungssignal beim Betrieb erzeugt,
**dass** eine Vorrichtung zur Detektion einer Vorderradbremsbetätigung vorgesehen ist und ein entsprechendes Signal erzeugt,
**dass** die Signale dem Steuergerät zugeführt sind und
**dass** das Steuergerät derart ausgebildet ist, um eine Airbagauslösung neben zumindest einer anderen Bedingung nur dann zuzulassen, wenn bei unbetätigter Vorderradbremse oder bei betätigter Vorderradbremse jedoch aktiviertem Antiblockiersystem das Vorderrad im wesentlichen auf Null verzögert ist.

2. Steuereinrichtung nach Anspruch 1,
**dadurch gekennzeichnet,**
**dass** ein Fahrgeschwindigkeitssensor vorgesehen ist und als andere Bedingung die Überschreitung eines definierten Fahrzeuggeschwindigkeitsschwellwertes verwendet ist.

3. Steuereinrichtung nach Anspruch 2,
**dadurch gekennzeichnet,**
**dass** als Geschwindigkeitsschwelle eine Geschwindigkeit im Bereich von 5 bis 20 km/h verwendet ist.

4. Steuereinrichtung nach einem der vorhergehenden Ansprüche,
**dadurch gekennzeichnet,**
**dass** ein Beschleunigungssensor vorgesehen ist und als andere Bedingung die Überschreitung eines definierten Verzögerungsgrenzwertes verwendet ist.

5. Verfahren für eine Airbagauslösung, insbesondere bei Einspurfahrzeugen, bei dem ein Steuergerät, welches verschiedene Eingangssignale empfängt und auswertet, bei Vorliegen definierter Bedingungen ein Signal zur Airbagauslösung erzeugt,
**dadurch gekennzeichnet,**
**dass** die Raddrehzahl eines Vorderrades oder die Verzögerung des Vorderrades erfasst wird,
**dass** die Aktivierung eines Antiblockiersystem - falls ein solches vorhanden ist - erfasst wird,
**dass** die Betätigung einer Vorderradbremse erfasst wird und
**dass** ein Signal zur Auslösung eines Airbags dann erzeugt wird, wenn neben zumindest einer anderen Bedingung das Vorderrad bei unbetätigter Vorderradbremse oder bei betätigter Vorderradbremse jedoch aktiviertem Antiblokkiersystem im wesentlichen auf Null verzögert wird.

6. Verfahren nach Anspruch 5,
**dadurch gekennzeichnet,**
**dass** als andere Bedingung die Überschreitung einer vorgegebenen Geschwindigkeitsschwelle verwendet wird.

7. Verfahren nach Anspruch 5 oder 6,
**dadurch gekennzeichnet,**
**dass** als andere Bedingung die Überschreitung einer vorgegebenen Verzögerungsschwelle verwendet wird.
